Europäisches Patentamt

European Patent Office

Office européen des brevets

(11) Veröffentlichungsnummer: **0 099 549**
**B1**

(12) # EUROPÄISCHE PATENTSCHRIFT

(45) Veröffentlichungstag der Patentschrift:
27.04.88

(51) Int. Cl.⁴: **B 60 N 1/06**

(21) Anmeldenummer: **83106901.8**

(22) Anmeldetag: **14.07.83**

(54) Gelenkbeschlag für Sitze mit verstellbarer Rückenlehne, insbesondere Kraftfahrzeugsitze.

(30) Priorität: 21.07.82 DE 3227222

(43) Veröffentlichungstag der Anmeldung:
01.02.84 Patentblatt 84/5

(45) Bekanntmachung des Hinweises auf die Patenterteilung:
27.04.88 Patentblatt 88/17

(84) Benannte Vertragsstaaten:
FR GB IT

(56) Entgegenhaltungen:
EP-A-0 046 882
EP-A-0 048 294
DE-A-2 924 211
DE-B-1 297 496
FR-A-2 392 843
FR-A-2 398 637
FR-A-2 412 438
FR-A-2 463 698
GB-A-2 073 311

(73) Patentinhaber: KEIPER RECARO GmbH & Co.,
Büchelstrasse 54- 58, D-5630 Remscheid 14 (DE)

(72) Erfinder: Pelz, Herbert, Im Rosenhof 20, D-5630
Remscheid (DE)

(74) Vertreter: Buse, Karl Georg, Dipl.- Phys.,
Patentanwälte Dipl.- Phys. Buse Dipl.- Phys.
Mentzel Dipl.- Ing. Ludewig Unterdörnen 114,
D-5600 Wuppertal 2 (DE)

## Beschreibung

Die Erfindung betrifft einen Gelenkbeschlag für Sitze mit verstellbarer Rückenlehne, insbesondere Kraftfahrzeugsitze, bei denen ein dem Sitz zugeordneter, fester Gelenkteil und ein der Lehne zugeordneter, schwenkbarer Gelenkteil über eine Schwenkachse miteinander verbunden sind und wobei eine die Lage der beiden Gelenkteile zueinander bestimmende, als Taumelgetriebe mit einem Exzenter ausgebildete Ver- und Feststelleinrichtung vorgesehen ist, und der Antrieb des Exzenters des an wenigstens einer Seite des Sitzes angeordneten Gelenkbeschlages über eine mit dem Exzenter drehverbundene Handhabe erfolgt, wobei einer der beiden Gelenkteile mittels eines Spannelementes auf der Schwenkachse elastisch abgestützt ist, und das Spannelement zwischen dem Exzenter der Schwenkachse und dem diesen umfassenden Gelenkteil angeordnet ist sowie ausschließlich im Scheitelpunktbereich des Exzenterabschnitts in Richtung auf die Zahneingriffsstelle wirksam ist.

Bei einem aus der DE-B-1 297 496 bekannten Gelenkbeschlag ist der einer Rückenlehne zugeordnete und ein Innenzahnrad der Verstelleinrichtung aufweisende Gelenkteil über einen Ringkörper aus elastischem Werkstoff auf einem zentrischen Abschnitt des Exzenters elastisch drehbar gelagert. Durch diesen elastischen Ringkörper sollen Toleranzen ausgeglichen werden, da durch mehr oder weniger starkes Zusammendrücken des Ringkörpers etwa auftretende Toleranzen ausgeglichen und das Innenzahnrad mit dem Stirnrad der Verstelleinrichtung in spielfreiem Eingriff miteinander gehalten werden können. Außerdem soll dadurch ein Klappern der Bauteile und somit eine Geräuschbildung vermieden werden. Die Abstützung des der Rückenlehne zugeordneten Gelenkteiles erfolgt jedoch seitlich versetzt zur Zahneingriffsebene, wodurch Momente entstehen, die sich ungünstig auf den Toleranzausgleich auswirken können und darüber hinaus bei belasteter Rückenlehne während deren Verstellbewegung zu Verklemmungen im Verzahnungsbereich führen können, so daß die Verstellung des Gelenkbeschlages wesentlich erschwert wird. Zur Verbesserung dieser Verhältnisse ist bereits durch die DE-A-2 924 211 vorgeschlagen worden, den mit dem Innenzahnkranz versehenen, schwenkbaren Gelenkteil derartig abzustützen, daß dieser den auf dem Exzenterabschnitt gelagerten Gelenkteil beiderseits bereichsweise übergreift und auf beiden Seiten des Exzenterabschnitts symmetrisch dazu auf den konzentrischen Abschnitten der Schwenkachse über zwischengeschaltete elastische Buchsen gelagert ist.

Beide bekannten Lösungen sind jedoch mit dem Nachteil behaftet, daß die elastischen Buchsen, sobald es die Gegenkräfte zulassen, eine gleichmäßige Zentrierung der Schwenkachse gegenüber den Gelenkteilen bewirken. Dadurch wird jedoch die zweifellos bei Belastung auftretende Spielfreiheit in der Verzahnung bei entlasteter Rückenlehne teilweise wieder aufgehoben.

Aus der GB-A-2 073 311 ist ein Gelenkbeschlag bekannt, dessen Exzenter in Richtung der Exzentrizität bzw. in Richtung auf die Zahneingriffsstelle stets nachgiebig anstellbar ist, indem im Exzenterabschnitt zwischen der Schwenkachse und dem den Exzenterabschnitt umfassenden Gelenkteil ein Spannelement in Form von Keilsegmenten mit einem diese spreizenden Federelement angeordnet ist. Diese in einem sichelförmigen Freiraum zwischen der Mitnehmerscheibe der Schwenkachse und dem diese umgreifenden Gelenkteil eingreifenden Keilsegmente sind ebenso schwierig herzustellen wie die Mitnehmerscheibe selbst.

Die Aufgabe der vorliegenden Erfindung besteht darin, einen Gelenkbeschlag der eingangs genannten Art (GB-A-2 073 311) zu schaffen, bei dem der Vorzug eines spielfreien Zahneingriffs bei Ruhestellung des Gelenkbeschlages bei Verwendung einfach herzustellender Bauteile erhalten bleibt.

Diese Aufgabe ist erfindungsgemäß dadurch gelöst, daß das Spannelement ringförmig mit einer Breite von etwa der halben Breite des Exzenters ausgebildet ist und in einer einen Scheibenwandteil belassenden Ausnehmung des auf dem Exzenter abgestützten Gelenkteiles angeordnet ist. Der Exzenterabschnitt der Schwenkachse läßt sich durch einen einfachen Drehvorgang herstellen oder auch zusammen mit der gesamten Schwenkachse auf einfache Weise durch Sintern, Spritzgießen od.dgl. herstellen. Durch die Wirkung des Spannelementes zwischen dem Exzenterscheitelpunkt und dem diesen umgebenden Gelenkteil wird die Verzahnung der Gelenkteile ständig in spielfreiem Eingriff gehalten, wodurch das Lagerspiel ebenfalls eliminiert wird, und somit ein vollständiger, sich aus dem Lagerspiel und dem Zahnflankenspiel zusammensetzender Radialspielausgleich stattfindet.

Bei einer vorteilhaften Ausführung der Erfindung ist zur fertigungstechnisch einfachen Herstellung der Bauteile das Spannelement vorzugsweise als elastischer Ring ausgebildet und umfaßt den Exzenterabschnitt, der auf einem Teil seines axialen Längenbereiches eine seinem Scheitelpunkt gegenüberliegend angeordnete Ausgleichsnut zur kompressionsfreien Aufnahme des Spannelementes aufweist. Dabei ist die Ausgleichsnut derart ausgebildet, daß sie, einen sichelartigen Freiraum bildend, bei einem Winkel von 90° hinter dem Scheitelpunkt des Exzenterabschnittes beginnt, bei einem Winkel von 180° die größte radiale Tiefe aufweist und bei einem Winkel von 270° hinter dem Scheitelpunkt stetig abnehmend aus dem Exzenterabschnitt austritt.

Bei einem anderen Ausführungsbeispiel der Erfindung ist das Spannelement vorteilhaft als den Exzenterabschnitt im Scheitelpunktbereich übergreifender, elastischer Halbkreisring ausgebildet, der sich mit einem Halbringansatz des Exzenterabschnitts zu einem diesen umfassenden Ring ergänzt. Durch die Anordnung des elastischen Halbkreisringes im Scheitelpunktbereich des Exzenterabschnitts wird eine auf die Zahneingriffsstelle gerichtete Spannkraft erzeugbar, so daß das Radialspiel, unabhängig davon, ob der Gelenkbeschlag sich in seiner Bewegungs- oder in seiner Ruhephase befindet, ausgeglichen bleibt.

Die Erfindung ist in zwei Ausführungsbeispielen auf der Zeichnung dargestellt und wird nachfolgend näher erläutert.

Es zeigen:

Fig. 1 den erfindungsgemäßen Gelenkbeschlag in einem Vertikalschnitt durch dessen die Schwenkachse aufweisendes Gelenkauge,

Fig. 2 die Schwenkachse in einem Schnitt nach der Linie II-II von Fig. 1,

Fig. 3 ein weiteres Ausführungsbeispiel eines Gelenkbeschlages, ebenfalls in einem Vertikalschnitt durch dessen Gelenkauge,

Fig. 4 die Schwenkachse des aus Fig. 3 ersichtlichen Ausführungsbeispieles ebenfalls in einem Schnitt nach der Linie IV-IV von Fig. 3.

Jeder der auf der Zeichnung dargestellten Gelenkbeschläge weist einen mit der Rückenlehne verbindbaren schwenkbaren Gelenkteil 10 sowie einen mit dem Sitzteil verbindbaren festen Gelenkteil 11 auf, die über eine Schwenkachse 12 miteinander schwenkbar verbunden sind. In ihrem mittleren Bereich weist die Schwenkachse 12 einen Exzenterabschnitt 13 auf, der sich in einem dem festen Gelenkteil 11 zugeordneten Stirnrad 14 drehbar abstützt. Dieses Stirnrad 14 ist beispielsweise durch Feinstanzen einstückig mit dem festen Gelenkteil 11 verbunden und kämmt mit der Innenverzahnung des dem schwenkbaren Gelenkteil 10 zugeordneten Innenzahnkranzes 15. Auch die Verzahnung des Innenzahnkranzes 15 mag durch Feinstanzen hergestellt sein, wobei der Innenzahnkranz durch eine aus der Ebene des Gelenkteiles 10 ausgedrückte Wandscheibe 16 überbrückt wird. Das Stirnrad 14 und der Innenzahnkranz 15 sind derart ausgebildet, daß der Kopfkreis des Stirnrades 14 mindestens um eine Zahnhöhe kleiner ist als der Fußkreis des Innenzahnkranzes 15. Demnach ist die Zähnezahl des Innenzahnkranzes 15 wenigstens um einen Zahn größer als die Zähnezahl des Stirnrades 14. Einerseits steht demnach immer eine große Anzahl von Zähnen miteinander im Eingriff und andererseits läuft die Zahneingriffsstelle bei einer Umdrehung der Schwenkachse 12 ebenfalls einmal um, wobei jedoch der einen Zahn mehr als das Stirnrad 14 aufweisende Innenzahnkranz 15 um den Winkel der Teilung eines Zahnes infolge der Exzentrizität des Exzenterabschnitts 13 weitergeschoben wird. Die Exzentrizität des Exzenterabschnittes entspricht dabei etwa der Differenz zwischen dem Fußkreisradius des Innenzahnkranzes 15 und dem Kopfkreisradius des Stirnrades 14 und ist derart bemessen, daß eine Selbsthemmung zwischen dem Stirnrad 14 und dem Innenzahnkranz 15 gewährleistet ist.

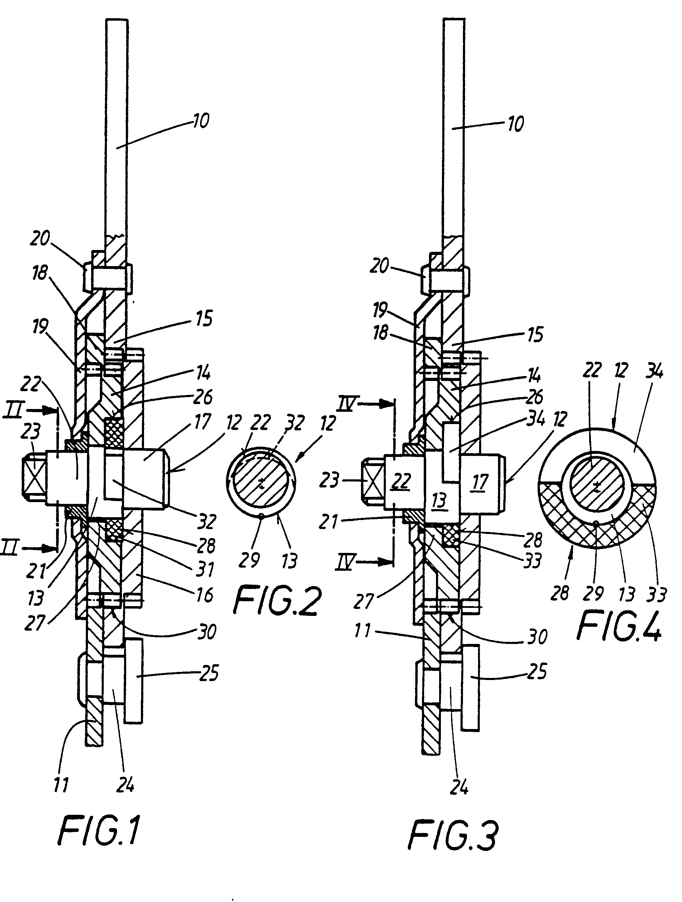

Die den Innenzahnkranz 15 überbrückende Wandscheibe 16 weist eine zum Fußkreis der Innenverzahnung konzentrische Bohrung auf, mit welcher sich der Gelenkteil 10 auf einem zentrischen Abschnitt 17 der Schwenkachse 12 drehgelenkig abstützt. Der das Stirnrad 14 mit einem Kragen 18 im Gelenkbereich überragende feste Gelenkteil 11 wird von einem Lagerschild 19 umgriffen, der am schwenkbaren Gelenkteil 10 durch Niete 20 festgelegt ist. Auch der Lagerschild 19 weist eine zum Fußkreis der Innenverzahnung des Innenzahnkranzes 15 konzentrische Bohrung auf, in welche eine Stütznabe 21 drehfest eingesetzt ist mit welcher sich der Lagerschild 19 auf einem weiteren zentrischen Abschnitt 22 der Schwenkachse 12 abstützt. Die konzentrischen Abschnitte 17 und 22 fassen den Exzenterabschnitt 13 der Schwenkachse 12 ein. An den zentrischen Abschnitt 22 schließt sich nach außen hin ein Mitnehmerabschnitt 23 an, mit welchem beispielsweise eine nicht dargestellte Verstellhandhabe in bekannter Weise verbunden sein kann. Am festen Gelenkteil 11 ist wenigstens ein Stützzapfen 24 befestigt, der mit einem Kragen 25 den unteren Randbereich des schwenkbaren Gelenkteiles 10 übergreift und diesen in axialer Richtung sichert. Das Stirnrad 14 weist eine konzentrisch zu seiner Verzahnung durch Auspressen des Scheibenwandteiles gebildete Ausnehmung 26 auf, und stützt sich mit einer konzentrisch zur Verzahnung angeordneten Bohrung mit Spiel im Scheibenwandteil 27 auf dem Exzenterabschnitt 13 ab. Die Ausnehmung 26 des Stirnrades 14 nimmt ein Spannelement 28 auf, was ausschließlich ausgehend vom Scheitelpunkt 29 des Exzenterabschnitts in Richtung auf die Zahneingriffsstelle 30 wirksam ist. Die vorgenannten Bauteile finden bei jedem der beiden aus den Fig. 1 und 3 ersichtlichen Ausführungsbeispielen Verwendung.

Bei dem aus den Fig. 1 und 2 ersichtlichen Ausführungsbeispiel wird das Spannelement 28 durch einen elastischen Ring 31 gebildet, der in die Ausnehmung 26 des Stirnrades 14 paßt und den Exzenterabschnitt 13 umfasst. Um die dem Scheitelpunkt 29 diametral gegenüberliegende Stelle des Exzenterabschnitts 13 von Elastizitätskräften freizuhalten und eine Kraftwirkung des elastischen Ringes in Richtung auf die Zahneingriffsstelle zu sichern, ist bei dem aus den Fig. 1 und 2 ersichtlichen Ausführungsbeispiel am Exzenterabschnitt 13 eine seinem Scheitelpunkt 29 gegenüberliegend angeordnete Ausgleichsnut 32 vorgesehen. Diese Ausgleichsnut 32 bildet einen sichelartigen Freiraum und beginnt bei einem Winkel von 90° hinter dem Scheitelpunkt 29 des Exzenterabschnitts 13, um bei einem Winkel von 180° die größte radiale Tiefe aufzuweisen, um dann wieder stetig abzunehmen und bei einem Winkel von 270° hinter dem Scheitelpunkt 29 des Exzenterabschnitts 13 aus diesem auszutreten. Durch die dem Scheitelpunktbereich gegenüberliegende Ausgleichsnut des Exzenterabschnittes 13 ist eine selbstzentrierende Wirkung des elastischen Ringes 31 zwischen dem Exzenterabschnitt 13 und dem Stirnrad 14 ausgeschlossen. Vielmehr wirkt die dem elastischen Ring innewohnende Kraft nur in Richtung auf die Zahneingriffsstelle, wodurch einerseits das Zahnflankenspiel und andererseits das Lagerspiel auf der der Zahneingriffsstelle gegenüberliegenden Seite vollständig eliminiert bleibt.

Bei dem aus den Fig. 3 und 4 ersichtlichen Ausführungsbeispiel besteht das Spannelement 28 aus einem den Exzenterabschnitt 13 im Bereich seines Scheitelpunktes übergreifenden elastischen Halbkreisring 33, der sich mit einem auf der dem Scheitelpunkt 29 gegenüberliegenden Seite angeordneten Halbringansatz 34 des Exzenterabschnitts 13 zu einem den Exzenterabschnitt 13 umfassenden Ring ergänzt. Der Halbringansatz 34 des Exzenterabschnitts 13 dient dabei zur Mitnahme des elastischen Halbkreisrings 33. Sowohl der Halbringansatz 34 als auch der elastische Halbkreisring 33 greifen in die Ausnehmung 26 des Stirnrades 14 vollständig ein. Dabei entspricht die Breite jeden Spannelementes 28, d.h. des elastischen Ringes 31 bzw. des elastischen Halbkreisringes 33 und des Halbringansatzes 34 etwa der halben Breite des Exzenterabschnitts 13 und stimmt mit der Tiefe der Ausnehmung 26 überein.

**Patentansprüche**

1. Gelenkbeschlag für Sitze mit verstellbarer Rückenlehne, insbesondere Kraftfahrzeugsitze, bei denen ein dem Sitz zugeordneter, fester Gelenkteil (11) und ein der Lehne zugeordneter, schwenkbarer Gelenkteil (10) über eine Schwenkachse (12) miteinander verbunden sind und wobei eine die Lage der beiden Gelenkteile zueinander bestimmende, als Taumelgetriebe mit einem Exzenter ausgebildete Ver- und Feststelleinrichtung (13, 14, 15) vorgesehen ist und der Antrieb des Exzenters (13) des an wenigstens einer Seite des Sitzes angeordneten Gelenkbeschlages über eine mit dem Exzenter drehverbundene Handhabe erfolgt, wobei einer der beiden Gelenkteile mittels eines Spannelementes (28) auf der Schwenkachse elastisch abgestützt ist und das Spannelement (28) zwischen dem Exzenter (13) der Schwenkachse (12) und dem diesen umfassenden Gelenkteil (11) angeordnet ist sowie ausschließlich im Scheitelpunkbereich (29) des Exzenterabschnitts (13) in Richtung auf die Zahneingriffsstelle (30) wirksam ist, dadurch gekennzeichnet, daß das Spannelement (28) ringförmig mit einer Breite von etwa der halben Breite des Exzenters (13) ausgebildet ist und in einer einen Scheibenwandteil (27) belassenden Ausnehmung (26) des auf dem Exzenter (13) abgestützten Gelenkteiles (11) angeordnet ist.

2. Gelenkbeschlag nach Anspruch 1, dadurch gekennzeichnet, daß das als elastischer Ring (31) ausgebildete Spannelement (28) den Exzenterabschnitt (13) umfaßt, der auf einem Teil seines axialen Längenbereiches eine seinem Scheitelpunktbereich (29) gegenüberliegend angeordnete Ausgleichsnut (32) zur kompressionsfreien Aufnahme des Spannelementes (28) autweist.

3. Gelenkbeschlag nach Anspruch 1, dadurch gekennzeichnet, daß die Ausgleichsnut (32) einen sichelartigen Freiraum bildend bei einem Winkel von 90° hinter dem Scheitelpunkt (29) des Exzenterabschnitts (13) beginnt, bei einem Winkel von 180° die größte radiale Tiefe aufweist und bei einem Winkel von 270° hinter dem Scheitelpunkt (29) stetig abnehmend aus dem Exzenterabschnitt (13) austritt.

4. Gelenkbeschlag nach Anspruch 1, dadurch gekennzeichnet, daß das Spannelement (28) als den Exzenterabschnitt (13) im Scheitelpunktbereich (29) übergreifender, elastischer Halbkreisring (33) ausgebildet ist, der sich mit einem Halbringansatz (34) des Exzenterabschnitts (13) zu einem diesen umfassenden Ring ergänzt.

**Claims**

1. A hinge fitting for seats with an adjustable backrest, in particular motor vehicle seats, in which a fixed hinge portion (11) which is associated with the seat and a pivotable hinge portion (10) which is associated with the backrest are connected together by way of a pivot spindle (12), wherein there is provided an adjusting and fixing means (13, 14, 15) which determines the position of the two ninge portions relative to each other and which is in the form of a nutating transmission means with an eccentric and the drive for the eccentric (13) of the hinge fitting which is arranged at at least one side of the seat is by way of a handle rotatably connected to the eccentric, wherein one of the two hinge portions is resiliently supported on the pivot spindle (12) by means of a stressing element (28) and the stressing element (28) is arranged between the eccentric (13) of the pivot spindle (12) and the hinge portion (11) surrounding same and is operative solely in the apex region (28) of the eccentric portion (13) in a direction towards the tooth engagement location (30) characterised in that the stressing element (28) is of an annular configuration, of a width of about half the width of the eccentric (13), and is arranged in a recess, which leaves a disc-shaped wall portion (27), in the hinge portion (11) which is supported on the eccentric (13).

2. A hinge fitting according to claim 1 characterised in that the stressing element (28) which is in the form of a resilient ring (31) embraces the eccentric portion (13) which, on a part of its axial longitudinal region, has a compensating groove (32) arranged in opposite relationship to its apex region (28), for receiving the stressing element (28) in a compression-free manner.

3. A hinge fitting according to claim 1 characterised in that the compensating groove (32), forming a sickle-like free space, begins at an angle of 90° after the apex (29) of the eccentric portion (13), is of the greatest radial depth at an angle of 180° and comes out of the eccentric portion (13) in a steadily decreasing configuration at an angle of 270° after the apex point (29).

4. A hinge fitting according to claim 1 characterised in that the stressing element (28) is in the form of a resilient semicircular ring (33) which engages over the eccentric portion (13) in the apex region (29) and which is supplemented by a half-ring shoulder (34) on the eccentric portion (13) to define a ring embracing same.


**Revendications**

1. Ferrure d'articulation destinée à des sièges à dossier réglable, en particulier des sièges de véhicules à moteur, dans lesquels une pièce (11) d'articulation fixe affectée à la partie formant l'assise et une pièce (10) d'articulation pivotante affectée au dossier sont reliées l'une à l'autre par un axe de pivotement (12) dans lequel on prévoit un dispositif (13, 14, 15) de réglage et de blocage sous la forme d'un engrenage flottant muni d'un excentrique déterminant la position relative des deux pièces d'articulation et dans lequel l'entraînement de l'excentrique (13) de la ferrure d'articulation disposée au moins d'un côté du siège, s'effectue au moyen d'une manette dont la rotation est solidaire de celle de l'excentrique, dans lequel une des deux pièces d'articulation est poussée élastiquement contre l'axe de pivotement à l'aide d'un élément de blocage (28) qui est disposé entre l'excentrique (13) de l'axe de pivotement (12) et la pièce (11) d'articulation qui entoure ce dernier, et n'a d'effet que dans la zone du point culminant (29) de la partie (13) formant l'excentrique, en direction de l'emplacement (30) d'engrènement des dents, caractérisée en ce que l'élément de blocage (28) présente une forme annulaire dont la largeur est sensiblement égale à la moitié de celle de l'excentrique (13), et est disposé dans un évidement (26) de la partie (11) d'articulation appuyée sur l'excentrique (13), cet évidement conservant une partie de paroi (27) en forme de disque.

2. Ferrure d'articulation selon la revendication 1, caractérisée en ce que l'élément de blocage (28) constitué par un anneau élastique (31) entoure la partie (13) formant un excentrique qui présente sur une partie de sa zone longitudinale axiale une gorge de compensation (32) disposée à l'opposé de la zone du point culminant (29) et destinée à recevoir sans comprèssion l'élément de blocage (28).

3. Ferrure d'articulation selon la revendication 1, caractérisée en ce que la gorge de compensation (32) commence en constituant un espace libre en forme de croissant, pour un décalage angulaire de 90° par rapport au point culminant (29) de la partie (13) formant un excentrique et qu'elle présente sa plus grande profondeur radiale pour un décalage angulaire de 180° et en ce qu'elle se termine en diminuant régulièrement en sortant de la partie (13) formant un excentrique un décalage angulaire de 270° par rapport au point culminant (29).

4. Ferrure d'articulation selon la revendication 1, caractérisée en ce que l'élément de blocage (28) est constitué par un demi-anneau élastique (33) qui entoure la partie (13) formant un excentrigue dans la zone du point culminant (29) et qui est complété par une partie en saillie (34) en forme de demi-anneau de la partie (13) formant un excentrique, pour former un anneau qui entoure cette dernière.

FIG.1

FIG.2

FIG.3

FIG.4